# EUROPÄISCHE PATENTSCHRIFT

(11) **EP 1 664 227 B1**
(45) Veröffentlichungstag und Bekanntmachung des Hinweises auf die Patenterteilung: **11.11.2009**
(21) Anmeldenummer: 04764880.3
(22) Anmeldetag: 07.09.2004
(51) Int. Cl.: C09J 175/06, C08G 18/08, C08K 3/36

(54) **WÄSSRIGE KLEBSTOFF-DISPERSIONEN**
AQUEOUS ADHESIVE DISPERSIONS
DISPERSIONS ADHESIVES AQUEUSES

(30) Priorität: 18.09.2003 DE 10343675
(43) Veröffentlichungstag der Anmeldung: 07.06.2006
(73) Patentinhaber: Bayer MaterialScience AG, 51368 Leverkusen (DE)
(72) Erfinder: ARNDT, Wolfgang, 41542 Dormagen (DE); MUSCH, Rüdiger, 51467 Bergisch Gladbach (DE); PANSKUS, Knut, 51375 Leverkusen (DE); RISCHE, Thorsten, 59423 Unna (DE); WERNER, Ralf, 06844 Dessau (DE); HENNING, Wolfgang, 51515 Kürten (DE)
(86) Internationale Anmeldenummer: PCT/EP2004/009933
(87) Internationale Veröffentlichungsnummer: WO 2005/035684

(56) Entgegenhaltungen:
- EP-A- 0 286 225
- EP-A- 0 924 232
- US-A- 6 077 901

## Beschreibung

Die Erfindung betrifft wässrige Polymer-Dispersionen auf Basis von Polyurethanen, ein Verfahren zu deren Herstellung und deren Verwendung.

Klebstoffe auf Basis von Polyurethanen sind überwiegend lösemittelhaltige Klebstoffe, die auf beide zu verbindenden Substrate aufgebracht und getrocknet werden. Durch anschließendes Fügen beider Substrate unter Druck bei RT oder nach Thermoaktivierung erhält man einen Verbindungsaufbau mit hoher Anfangsfestigkeit unmittelbar nach dem Fügevorgang.

Aus ökologischen Gründen besteht ein wachsender Bedarf an geeigneten wässrigen Klebstoff-Dispersionen, die sich zu entsprechenden wässrigen Klebstoff-Formulierungen verarbeiten lassen. Derartige Systeme haben den Nachteil, dass nach dem Verdampfen des Wassers die Anfangswärmefestigkeit unmittelbar nach dem Fügevorgang, trotz vorheriger Thermoaktivierung des trockenen Klebstoff-Films im Vergleich zu lösemittelhaltigen Klebstoffen, deutlich niedriger ist.

Aus dem Stand der Technik ist der Einsatz von Kieselsäure-Produkten für unterschiedliche Anwendungen bekannt. Während feste SiO₂-Produkte vielfach zur Steuerung rheologischer Eigenschaften, als Füllstoffe oder Adsorbentien eingesetzt werden, dominiert bei Kieselsolen die Anwendung als Bindemittel diverser anorganischer Materialien, als Poliermittel von Halbleitern oder als Flockungspartner in kolloidchemischen Reaktionen. Beispielsweise wird in der EP-A 0 332 928 der Einsatz von Polychloropren-Latices in Gegenwart von Kieselsolen als Imprägnierschicht bei der Herstellung von Brandschutzelementen offenbart. In der FR-A 2 341 537 und FR-A 2 210 699 werden pyrogene Kieselsäuren in Kombination mit Polychloroprenlatices zur Herstellung flammfester Schaumzurichtungen oder zur Bitumenvergütung und in der JP-A 06 256 738 in Kombination mit Chloropren-Acrylsäure-Copolymeren beschrieben.

Der vorliegenden Erfindung lag die Aufgabe zugrunde, wässrige Klebstoffzusammensetzungen bereitzustellen, die nach der Applikation auf den zu verklebenden Substraten und dem Fügen eine hohe Anfangswärmefestigkeit, besonders nach einer Thermoaktivierung, aufweisen.

Es wurde überraschend gefunden, dass durch eine geeignete Kombination von Polyurethan-Dispersionen und wässrigen Siliciumdioxid-Dispersionen Klebstoffe hergestellt werden können, die nach dem Fügen eine hohe Anfangswärmefestigkeit zeigen.

Gegenstand der vorliegenden Erfindung ist die Verwendung einer wässrigen Polymer-Dispersion enthaltend
a) mindestens eine Polyurethan-Dispersion mit einem mittleren Teilchendurchmesser von 60 bis 350 nm, bevorzugt 20 bis 80 nm sowie
b) mindestens eine wässrige Siliciumdioxid-Dispersion mit einem Partikeldurchmesser der SiO₂-Partikel von 20 bis 400 nm, bevorzugt 30 bis 100 nm, besonders bevorzugt 40 bis 80 nm zur Herstellung von Klebstoffen.

Die erfindungsgemäß einzusetzenden Polyurethan-Dispersionen (a) enthalten Polyurethane (A), die Reaktionsprodukte folgender Komponenten sind:
A1) Polyisocyanaten,
A2) polymeren Polyolen und/oder Polyaminen mit mittleren Molgewichten von 400 bis 8000,
A3) gegebenenfalls Mono- bzw. Polyalkoholen oder Mono- bzw. Polyaminen oder Aminoalkohole mit Molgewichten bis 400,
   sowie mindestens einer Verbindung ausgewählt aus
A4) Verbindungen, die mindestens eine ionische oder potentiell ionische Gruppe aufweisen und/oder
A5) nichtionisch hydrophilierten Verbindungen.

Eine potentiell ionische Gruppe ist im Sinne der Erfindung eine Gruppe, die zur Ausbildung einer ionischen Gruppe befähigt ist.

Bevorzugt werden die Polyurethane (A) hergestellt aus 7 bis 45 Gew.-% A1), 50 bis 91 Gew.-% A2), 0 bis 15 Gew.-% A5), 0 bis 12 Gew.-% ionischer oder potentiell ionischer Verbindungen A4) sowie gegebenenfalls 0 bis 30 Gew.-% von Verbindungen A3), wobei die Summe von A4) und A5) 0,1 bis 27 Gew.-% beträgt und sich die Summe der Komponenten zu 100 Gew.-% addieren.

Besonders bevorzugt sind die Polyurethane (A) aufgebaut aus 10 bis 30 Gew.-% A1), 65 bis 90 Gew.-% A2), 0 bis 10 Gew.-% A5), 3 bis 9 Gew.-% ionischer oder potentiell ionischer Verbindungen A4) sowie gegebenenfalls 0 bis 10 Gew.-% von Verbindungen A3), wobei die Summe von A4) und A5) 0,1 bis 19 Gew.-% beträgt und sich die Summe der Komponenten zu 100 Gew.-% addieren.

Ganz besonders bevorzugt werden die Polyurethane (A) hergestellt aus 8 bis 27 Gew.-% A1), 65 bis 85 Gew.-% A2), 0 bis 8 Gew.-% A5), 3 bis 8 Gew.-% ionischer oder potentiell ionischer Verbindungen A4) sowie gegebenenfalls 0 bis 8 Gew.-% von Verbindungen A3), wobei die Summe von A4) und A5) 0,1 bis 16 Gew.-% beträgt und sich die Summe der Komponenten zu 100 Gew.-% addieren.

Geeignete Polyisocyanate (A1) sind aromatische, araliphatische, aliphatische oder cycloaliphatische Polyisocyanate. Es können auch Mischungen solcher Polyisocyanate eingesetzt werden. Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4''-triisocyanat oder deren Derivate mit Urethan-, Isocyanurat-, Allophanat-, Biuret-, Uretdion-, Iminooxadiazindionstruktur und Mischungen derselben. Bevorzugt sind Hexamethylendiisocyanat, Isophorondiisocyanat und die isomeren Bis(4,4'-isocyanatocyclohexyl)methane sowie deren Mischungen.

Bevorzugt handelt es sich um Polyisocyanate oder Polyisocyanatgemische der genannten Art mit ausschließlich aliphatisch und/oder cycloaliphatisch gebundenen Isocyanatgruppen. Ganz besonders bevorzugte Ausgangskomponenten (A1) sind Polyisocyanate bzw. Polyisocyanatgemische auf Basis von HDI, IPDI und/oder 4,4'-Diisocyanatodicyclohexylmethan.

Weiterhin geeignet als Polyisocyanate (A1) sind beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Iminooxadiazindion- und/oder Oxadiazintrionstruktur, wie sie beispielsweise in J. Prakt. Chem. 336 (1994) S. 185 - 200 beschrieben sind.

Geeignete polymere Polyole oder Polyamine (A2) verfügen über eine OH-Funktionalität von mindestens 1,5 bis 4, wie zum Beispiel Polyacrylate, Polyester, Polylactone, Polyether, Polycarbonate, Polyestercarbonate, Polyacetale, Polyolefine und Polysiloxane. Bevorzugt sind Polyole in einem Molgewichtsbereich von 600 bis 2500 mit einer OH-Funktionalität von 2 bis 3.

Die in Frage kommenden Hydroxylgruppen aufweisenden Polycarbonate sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkompomponente 40 bis 100 Gew.-% Hexandiol, bevorzugt 1,6-Hexandiol und/oder Hexandiol-Derivate, bevorzugt solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-A 1 770 245 oder durch Veretherung von Hexandiol mit sich selbst zum Di- oder Trihexylenglykol erhalten wurden. Die Herstellung solcher Derivate ist z.B. aus DE-A 1 570 540 bekannt. Auch die in DE-A 3 717 060 beschriebenen Polyether-Polycarbonatdiole können eingesetzt werden.

Die Hydroxylpolycarbonate sollten bevorzugt linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, und Sorbit, Methylglykosid, 1,3,4,6-Dianhydrohexite.

Als Polyetherpolyole geeignet sind die in der Polyurethanchemie an sich bekannten Polytetramethylenglykolpolyether, die z.B. über Polymerisation von Tetrahydrofuran durch kationische Ringöffnung hergestellt werden können.

Darüber hinaus geeignete Polyetherpolyole sind Polyether, wie z.B. die unter Verwendung von Startermolekülen hergestellten Polyole aus Styroloxid, Propylenoxid, Butylenoxide oder Epichlorhydrins, insbesondere des Propylenoxids.

Als Polyesterpolyole geeignet sind z.B. Umsetzungsprodukte von mehrwertigen, bevorzugt zweiwertigen und gegebenenfalls zusätzlich dreiwertigen Alkoholen mit mehrwertigen, bevorzugt zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome substituiert und/oder ungesättigt sein.

Die Komponenten (A3) sind zur Terminierung des Polyurethan-Prepolymers geeignet. Dazu kommen monofunktionelle Alkohole und Monoamine in Betracht. Bevorzugte Monoalkohole sind aliphatische Monoalkohole mit 1 bis 18 C-Atomen, wie z.B. Ethanol, n-Butanol, Ethylenglykolmonobutylether, 2-Ethylhexanol, 1-Octanol, 1-Dodecanol oder 1-Hexadecanol. Bevorzugte Monoamine sind aliphatische Monoamine, wie z.B. Diethylamin, Dibutylamin, Ethanolamin, N-Methylethanolamin oder N,N-Diethanolamin und Amine der Jeffamin^{®} M-Reihe (Huntsman Corp. Europe, Belgien) oder aminofunktionelle Polyethylenoxide und Polypropylenoxide.

Ebenfalls als Komponente (A3) sind Polyole, Aminopolyole oder Polyamine mit einem Molgewicht unter 400 geeignet, die in der entsprechenden Literatur in großer Zahl beschrieben sind.

Bevorzugte Komponenten (A3) sind beispielsweise:
a) Alkandiole bzw. -triole, wie Ethandiol, 1,2- und 1,3-Propandiol, 1,4- und 2,3-Butandiol, 1,5-Pentandiol, 1,3 Dimethylpropandiol, 1,6-Hexandiol, Neopentylglykol, 1,4-Cyclohexandimethanol, 2-Methyl-1,3-propandiol, 2-Ethyl-2-butylpropandiol, Trimethylpentandiol, stellungsisomere Diethyloctandiole, 1,2- und 1,4-Cyclohexandiol, hydriertes Bisphenol A [2,2-Bis(4-hydroxycyclohexyl)propan], 2,2-Dimethyl-3-hydroxypropionsäure-(2,2-dimethyl-3-hydroxypropylester), Trimethylolethan, Trimethylol-propan oder Glycerin,
b) Etherdiole, wie Diethylendiglykol, Triethylenglykol, Tetraethylenglykol, Dipropylenglykol, Tripropylenglykol, 1,3-Butylenglykol oder Hydrochinon-dihydroxyethylether,
c) Esterdiole der allgemeinen Formeln (I) und (II),

   HO-(CH₂)ₓ-CO-O-(CH₂)_{y}-OH (I),

   HO-(CH₂)ₓ-O-CO-R-CO-O(CH₂)ₓ-OH (II),

   in welchen
   - R: ein Alkylen- oder Arylenrest mit 1 bis 10 C-Atomen, bevorzugt 2 bis 6 C-Atomen,
   - x: 2 bis 6 und
   - y: 3 bis 5 ist,
   wie z.B. δ-Hydroxybutyl-ε-hydroxy-capronsäureester, ω-Hydroxyhexyl-γ-hydroxybuttersäureester, Adipinsäure-(β-hydroxyethyl)ester und Terephthal-säurebis(β-hydroxy-ethyl)-ester und
d) Di- und Polyamine wie z.B. 1,2-Diaminoethan, 1,3 Diaminopropan, 1,6-Diaminohexan, 1,3- und 1,4-Phenylendiamin, 4,4'-Diphenylmethandiamin, Isophorondiamin, Isomerengemisch von 2,2,4- und 2,4,4-Trimethylhexa-methylendiamin, 2-Methyl-pentamethylendiamin, Diethylen-triamin, 1,3- und 1,4-Xylylendiamin, α,α,α',α'-Tetramethyl-1,3- und - 1,4-xylylendiamin, 4,4-Diaminodicyclohexylmethan, aminofunktionelle Polyethylenoxide oder Polypropylenoxide, die unter dem Namen Jeffamin^{®}, D-Reihe (Fa. Huntsman Corp. Europe, Belgien) erhältlich sind, Diethylentriamin und Triethylentetramin. Als Diamine im Sinne der Erfindung sind auch Hydrazin, Hydrazinhydrat und substituierte Hydrazine geeignet, wie z.B. N-Methylhydrazin, N,N'-Dimethylhydrazin und deren Homologe sowie Säuredihydrazide, Adipinsäure, β-Methyladipinsäure, Sebacinsäure, Hydracrylsäure und Terephthalsäure, Semicarbazido-alkylenhydrazide, wie z.B. β-Semicarbazidopropionsäurehydrazid (z.B. beschrieben in DE-A 1 770 591), Semicarbazidoalkylen-carbazinester, wie z.B. 2-Semicarbazidoethylcarbazinester (z.B. beschrieben in DE-A 1 918 504) oder auch Aminosemicarbazid-Verbindungen, wie z.B. β-Aminoethylsemicarbazido-carbonat (z.B. beschrieben in DE-A 1 902 931).

Die Komponente (A4) enthält ionische Gruppen, die entweder kationischer oder anionischer Natur sein können. Kationisch, anionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen (A4) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, 1,2- oder 1,3-Propylendlamin-β-ethylsulfonsäure, Ethylendiamin-propyl- oder -butylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in DE-A 2 446 440 (Seite 5-9, Formel I-III) sowie in kationische Gruppen überführbare Bausteine wie N-Methyldiethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierend wirkende Verbindungen (A5) sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (III), 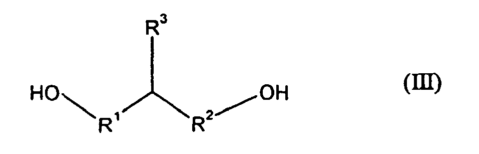 in welcher
- R¹ und R²: unabhängig voneinander jeweils einen zweiwertigen aliphatischen, cycloali- phatischen oder aromatischen Rest mit 1 bis 18 C-Atomen, die durch Sauerstoff und/oder Stickstoffatome unterbrochen sein können, bedeuten und
- R³: für einen alkoxyterminierten Polyethylenoxidrest steht.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Zur Herstellung des Polyurethans (A) wird bevorzugt eine Kombination aus nichtionischen (A4) und ionischen (A5) Hydrophilierungsmitteln verwendet. Besonders bevorzugt sind Kombinationen aus nichtionischen und anionischen Hydrophilierungsmitteln.

Die Herstellung des wässrigen Polyurethans (A) kann in einer oder mehreren Stufen in homogener, oder bei mehrstufiger Umsetzung, teilweise in disperser Phase durchgeführt werden. Nach vollständig oder teilweise durchgeführter Polyaddition erfolgt ein Dispergier-, Emulgier- oder Lösungsschritt. Im Anschluss erfolgt gegebenenfalls eine weitere Polyaddition oder Modifikation in disperser Phase.

Zur Herstellung des Polyurethans (A) können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671 - 1682). Bevorzugt ist das Schmelz-Emulgier-, Präpolymer-Misch- und das Aceton-Verfahren. Besonders bevorzugt ist das Aceton-Verfahren.

Üblicherweise werden die Bestandteile (A2) bis (A5), die keine primären oder sekundären Aminogruppen aufweisen, und ein Polyisocyanat (A1) zur Herstellung eines Polyurethan-Präpolymers im Reaktor ganz oder teilweise vorgelegt und gegebenenfalls mit einem mit Wasser mischbaren aber gegenüber Isocyanatgruppen inerten Lösungsmittel verdünnt, bevorzugt aber ohne Lösungsmittel, auf höhere Temperaturen, bevorzugt im Bereich von 50 bis 120°C, aufgeheizt.

Geeignete Lösungsmittel sind z.B. Aceton, Butanon, Tetrahydrofuran, Dioxan, Acetonitril, Dipropylenglykoldimethylether und 1-Methyl-2-pyrrolidon, die nicht nur zu Beginn der Herstellung, sondern gegebenenfalls in Teilen auch später zugegeben werden können. Bevorzugt sind Aceton und Butanon. Es ist möglich, die Reaktion unter Normaldruck oder erhöhtem Druck, z.B. oberhalb der Normaldruck-Siedetemperatur eines Lösungsmittels wie z.B. Aceton durchzuführen.

Weiterhin können die zur Beschleunigung der Isocyanatadditionsreaktion bekannten Katalysatoren, wie z.B. Triethylamin, 1,4-Diazabicyclo-[2,2,2]-octan, Dibutylzinnoxid, Zinndioktoat oder Dibutylzinndilaurat, Zinn-bis-(2-ethylhexanoat) oder andere metallorganischen Verbindungen mit vorgelegt oder später zudosiert werden. Bevorzugt ist Dibutylzinndilaurat.

Anschließend werden die gegebenenfalls zu Beginn der Reaktion noch nicht zugegebenen Bestandteile (A1), (A2), gegebenenfalls (A3) und (A4) und/oder (A5), die keine primären oder sekundären Aminogruppen aufweisen, zudosiert. Bei der Herstellung des Polyurethan-Präpolymeren beträgt das Stoffmengenverhältnis von Isocyanatgruppen zu mit Isocyanat reaktiven Gruppen 0,90 bis 3, bevorzugt 0,95 bis 2,5, besonders bevorzugt 1,05 bis 2,0. Die Umsetzung der Komponenten (A1) bis (A5) erfolgt bezogen auf die Gesamtmenge an mit Isocyanaten reaktiven Gruppen des Teils von (A2) bis (A5), der keine primären oder sekundären Aminogruppen aufweist, teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, z.B. Infrarot- oder Nahinfrarot-Spektren, Bestimmungen des Brechungsindex als auch chemische Analysen, wie Titrationen, von entnommenen Proben vorgenommen werden. Es werden Polyurethan-Präpolymere, die freie Isocyanatgruppen enthalten, in Substanz oder in Lösung erhalten.

Nach oder während der Herstellung der Polyurethan-Präpolymere aus (A1) und (A2) bis (A5) erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder -hydrogencarbonat, Trimethylamin, Triethylamin, Tributylamin, Diisopropylethylamin, Dimethylethanolamin, Diethylethanolamin, Triethanolamin, Kaliumhydroxid oder Natriumcarbonat eingesetzt, bevorzugt Triethylamin, Triethanolamin, Dimethylethanolamin oder Diisopropylethylamin. Die Stoffmenge der Basen liegt zwischen 50 und 100%, bevorzugt zwischen 60 und 90 % der Stoffmenge der anionischen Gruppen. Im Falle kationischer Gruppen werden Schwefelsäuredimethylester oder Bernsteinsäure eingesetzt. Werden nur nichtionisch hydrophilierte Verbindungen (A5) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Mögliche aminische Komponenten sind (A2), (A3) und (A4) mit denen gegebenenfalls noch verbliebenen Isocyanatgruppen umgesetzt werden können. Diese Kettenverlängerung kann dabei entweder in Lösungsmittel vor dem Dispergieren, während des Dispergierens oder in Wasser nach dem Dispergieren durchgeführt werden. Werden als (A4) aminische Komponenten eingesetzt, erfolgt die Kettenverlängerung bevorzugt vor der Dispergierung.

Die aminische Komponente (A2), (A3) oder (A4) kann mit organischen Lösungsmitteln und/oder mit Wasser verdünnt dem Reaktionsgemisch zugegeben werden. Bevorzugt werden 70 bis 95 Gew.-% Lösungsmittel und/oder Wasser eingesetzt. Sind mehrere aminische Komponeten vorhanden, so kann die Umsetzung nacheinander in beliebiger Reihenfolge oder gleichzeitig durch Zugabe einer Mischung erfolgen.

Zwecks Herstellung der Polyurethan-Dispersion (A) werden die Polyurethan-Präpolymere, gegebenenfalls unter starker Scherung, wie z.B. starkem Rühren oder unter Verwendung eines Düsenstrahldispergators, entweder in das Dispergierwasser eingetragen oder man rührt umgekehrt das Dispergierwasser zu den Präpolymeren. Anschließend kann dann, falls noch nicht in der homogenen Phase geschehen, die Molmassenerhöhung durch Reaktion von gegebenenfalls vorhandenen Isocyanatgruppen mit der Komponente (A2), (A3) erfolgen. Die eingesetzte Menge an Polyamin (A2), (A3) hängt von den noch vorhandenen, nicht umgesetzten Isocyanatgruppen ab. Bevorzugt werden 50 bis 100 %, besonders bevorzugt 75 bis 95% der Stoffmenge der Isocyanatgruppen mit Polyaminen (A2), (A3) umgesetzt.

Gegebenenfalls kann das organische Lösungsmittel abdestilliert werden. Die Dispersionen haben einen Festkörpergehalt von 10 bis 70 Gew.-%, bevorzugt 25 bis 65 Gew.-% und besonders bevorzugt 30 bis 60 Gew.-%.

Die erfindungsgemäß einzusetzenden Polyurethandispersionen können alleine oder mit bekannten Bindemitteln, Hilfsstoffen und Zugschlagstoffen, insbesondere Lichtschtzmitteln wie UV-Absorbern und sterisch gehinderten Aminen (HALS), weiterhin Antioxidantien, Füllstoffen sowie Lackhilfsmitteln, z.B. Antiabsetzmittel, Entschäumungs- und/oder Netzmitteln, Verlaufmitteln, Reaktiv-Verdünnern, Weichmachern, Katalysatoren, Hilfslösemitteln und/oder Verdickern und Additiven, wie beispielsweise Dispersionen, Pigmenten, Farbstoffen oder Mattierungsmitteln, eingesetzt werden. Insbesondere sind Kombinationen mit Polyurethandispersionen oder Polyacrylatdispersionen, die gegebenenfalls auch hydroxyfunktionell seien können, problemlos möglich. Die Additive können den PUR-Dispersionen unmittelbar vor der Verarbeitung zugegeben werden. Es ist aber auch möglich, zumindest einen Teil der Additive vor oder während der Dispergierung des Bindemittels bzw. Bindemittel-/Vernetzergemisches zuzugeben. Die Auswahl und die Dosierung dieser Stoffe, die den Einzelkomponenten und/oder der Gesamtmischung zugegeben werden können, sind dem Fachmann bekannt.

Wässrige Dispersionen von Siliciumdioxid sind seit langem bekannt. Je nach Herstellprozess liegen sie in unterschiedlicher Struktur vor.

Erfindungsgemäß geeignete Siliciumdioxid-Dispersionen b) können auf Basis von Kieselsol, Kieselgel, pyrogenen Kieselsäuren oder Fällungskieselsäuren oder Mischungen der genannten erhalten werden.

Kieselsäuresole sind kolloidale Lösungen von amorphem Siliciumdioxid in Wasser, die auch als Siliciumdioxidsole, meist aber kurz als Kieselsole bezeichnet werden. Das Siliciumdioxid liegt dabei in Form von annähernd kugelförmigen und an der Oberfläche hydroxilierten Partikeln vor. Der Partikeldurchmesser der Kolloidteilchen beträgt in der Regel 1 bis 200 nm, wobei die zur Teilchengröße korrelierende spezifische BET-Oberfläche (bestimmt nach der Methode von G.N. Sears, Analytical Chemistry Vol. 28, N. 12, 1981-1983, Dezember 1956) bei 15 bis 2000 m²/g liegt. Die Oberfläche der SiO₂-Teilchen weist eine Ladung auf, die durch ein entsprechendes Gegenion ausgeglichen wird, das zur Stabilisierung der kolloidalen Lösung führt. Die alkalisch stabilisierten Kieselsole besitzen einen pH-Wert von 7 bis 11,5 und enthalten als Alkalisierungsmittel beispielsweise geringe Mengen Na₂O, K₂O, Li₂O, Ammoniak, organische Stickstoffbasen, Tetraalkylammoniumhydroxide oder Alkali- oder Ammoniumaluminate. Kieselsole können auch als semistabile kolloidale Lösungen schwach sauer vorliegen. Ferner ist es möglich, durch Beschichtung der Oberfläche mit Al₂(OH)₅Cl kationisch eingestellte Kieselsole herzustellen. Die Feststoff-Konzentrationen der Kieselsole liegen bei 5 bis 60 Gew.-% SiO₂.

Der Herstellprozess für Kieselsole durchläuft im wesentlichen die Produktionsschritte Entalkalisierung von Wasserglas mittels Ionenaustausch, Einstellung und Stabilisierung der jeweils gewünschten Teilchengrößen(verteilung) der SiO₂-Partikel, Einstellung der jeweils gewünschten SiO₂-Konzentration und gegebenenfalls Durchführung einer Oberflächenmodifikation der SiO₂-Partikel, wie beispielsweise mit Al₂(OH)₅Cl. In keinem dieser Schritte verlassen die SiO₂-Partikel den kolloidal gelösten Zustand. Dadurch erklärt sich das Vorliegen der diskreten Primärpartikel mit unter anderem hoher Bindereffektivität.

Unter Kieselgelen versteht man kolloidal geformte oder ungeformte Kieselsäuren von elastischer bis fester Konsistenz mit lockerer bis dichter Porenstruktur. Die Kieselsäuren liegen in Form von hochkondensierter Polykieselsäuren vor. Auf der Oberfläche befinden sich Siloxan- und/oder Silanol-Gruppen. Die Herstellung der Kieselgele erfolgt aus Wasserglas durch Umsetzung mit Mineralsäuren.

Des Weitem wird zwischen pyrogener Kieselsäure und Fällungskieselsäure unterschieden. Beim Fällungsverfahren wird Wasser vorgelegt und anschließend Wasserglas und Säure, wie H₂SO₄, simultan zugegeben. Dabei entstehen kolloidale Primärteilchen, die mit fortschreitender Reaktion agglomerieren und zu Agglomeraten verwachsen. Die Primärpartikel von diesen als Feststoff vorliegenden Kieselsäuren sind zu Sekundäragglomeraten fest vernetzt.

Pyrogene Kieselsäure kann durch Flammenhydrolyse oder mit Hilfe des Lichtbogenverfahrens hergestellt werden. Das dominierende Syntheseverfahren für pyrogene Kieselsäuren ist die Flammenhydrolyse, bei der Tetrachlorsilan in einer Knallgasflamme zersetzt wird. Die dabei gebildete Kieselsäure ist röntgenamorph. Pyrogene Kieselsäuren besitzen an ihrer nahezu porenfreien Oberfläche deutlich weniger OH-Gruppen als Fällungskieselsäuren. Die über Flammhydrolyse hergestellten pyrogenen Kieselsäuren haben spezifische Oberflächen von 50 bis 600 m²/g (DIN 66131) und Primärpartikelgrößen von 5 bis 50 nm, die über das Lichtbogenverfahren hergestellten Kieselsäuren haben spezifische Oberflächen von 25 bis 300 m²/g (DIN 66131) und von 5 bis 500 nm.

Weitere Angaben zu Synthese und Eigenschaften von Kieselsäuren in fester Form sind beispielsweise K.H. Büchel, H.-H. Moretto, P. Woditsch "Industrielle Anorganische Chemie", Wiley VCH Verlag 1999, Kap. 5.8 zu entnehmen.

Werden für die erfindungsgemäß einzusetzenden Polymer-Dispersionen ein als isolierter Feststoff vorliegender SiO₂-Rohstoff, wie beispielsweise pyrogene oder gefällte Kieselsäure, eingesetzt, so wird dieser in eine wässrige SiO₂-Dispersion durch Dispergieren überführt.

Zur Herstellung der Siliciumdioxid-Dispersionen werden Dispergatoren des Standes der Technik eingesetzt, bevorzugt solche, die zur Erzeugung hoher Scherreaten geeignet sind, wie z.B. Ultratorrax oder Dissolverscheiben.

Bevorzugt werden solche wässrigen Siliciumdioxid-Dispersionen eingesetzt, deren SiO₂-Partikel eine Primärpartikelgröße von 20 bis 400 nm, bevorzugt 30 bis 100 nm und besonders bevorzugt 40 bis 80 nm aufweisen. Für den Fall das gefällte Kieselsäuren eingesetzt werden, werden diese zwecks Teilchenverkleinerung gemahlen.

Bevorzugte erfmdungsgemäße Polymer-Dispersionen sind solche, in denen die SiO₂-Partikel der Siliciumdioxid-Dispersion b) als diskrete unvernetzte Primärpartikel vorliegen.

Es ist ebenfalls bevorzugt, dass die SiO₂-Partikel über Hydroxylgruppen an der Partikel-Oberfläche verfügen.

Besonders bevorzugt werden als wässrige Siliciumdioxid-Dispersionen wässrige Kieselsäuresole eingesetzt.

Zur Herstellung der Polymer-Dispersionen werden die Mengenverhältnisse der einzelnen Komponenten so gewählt, dass die resultierende Dispersion einen Gehalt an dispergierten Polymeren von 30 bis 60 Gew.-% aufweisen, wobei die Anteile der Polyurethan-Dispersion (a) von 55 bis 99 Gew.-% und der Siliciumdioxid-Dispersion (b) von 1 bis 45 Gew.-% betragen, wobei sich die Prozentangaben auf das Gewicht nichtflüchtiger Anteile beziehen und zu 100 Gew.-% addieren.

Bevorzugt enthalten die Polymer-Dispersionen einen Anteil von 70 Gew.-% bis 98 Gew.-% einer Polyurethan-Dispersion (a) und einen Anteil von 2 Gew.-% bis 30 Gew.-% einer Kieselsol-Dispersion (b), besonders bevorzugt sind die Mischungen aus 80 Gew.-% bis 93 Gew.-% an Dispersion (a) und 20 Gew.-% bis 7 Gew.-% an Dispersion (b), wobei sich die Prozentangaben auf das Gewicht nichtflüchtiger Anteile beziehen und zu 100 Gew.-% addieren.

Die Polyurethan-Dispersionen können gegebenenfalls auch andere Dispersionen wie z.B. Polyacrylat-, Polyvinylidenchlorid-, Polybutadien-, Polyvinylacetat- Polychloropren- oder StyrolButadien-Dispersionen in einem Anteil von bis zu 30 Gew.-% enthalten.

Die Polymer-Dispersionen enthalten gegebenenfalls weitere Klebstoffhilfs- und Zusatzmittel. Beispielsweise können Füllstoffe wie Quarzmehl, Quarzsand, Schwerspat, Calciumcarbonat, Kreide, Dolomit oder Talkum, gegebenenfalls zusammen mit Netzmitteln, beispielsweise Polyphosphaten, wie Natriumhexametaphosphat, Naphthalinsulfonsäure, Ammonium- oder Natriumpolyacryl-Säuresalze zugesetzt werden, wobei die Füllstoffe in Mengen von 10 bis 60 Gew.-%, bevorzugt von 20 bis 50 Gew.-%, und die Netzmittel in Mengen von 0,2 bis 0,6 Gew.-%, alle Angaben bezogen auf nichtflüchtige Anteile, zugesetzt werden.

Weitere geeignete Hilfsmittel sind beispielsweise in Mengen von 0,01 bis 1 Gew.-%, bezogen auf nichtflüchtige Anteile, einzusetzende organische Verdickungsmittel, wie Cellulosederivate, Alginate, Stärke, Stärkederivate, Polyurethan-Verdickungsmittel oder Polyacrylsäure oder in Mengen von 0,05 bis 5 Gew.-%, bezogen auf nichtflüchtige Anteile, einzusetzende anorganische Verdickungsmittel, wie beispielsweise Bentonite.

Zur Konservierung können der erfindungsgemäßen Klebstoffzusammensetzung auch Fungizide zugesetzt werden. Diese kommen in Mengen von 0,02 bis 1 Gew.-%, bezogen auf nichtflüchtige Anteile, zum Einsatz. Geeignete Fungizide sind beispielsweise Phenol- und Kresolderivate oder zinnorganische Verbindungen.

Gegebenenfalls können auch klebrigmachende Harze, wie z.B. unmodifizierte oder modifizierte Naturharze wie Kollophoniumester, Kohlenwasserstoffharze oder synthetische Harze wie Phthalatharze der erfindungsgemäßen Polymer-Dispersion in dispergierter Form zugesetzt werden (siehe z.B. in "Klebharze" R. Jordan, R. Hinterwaldner, S. 75-115, Hinterwaldner Verlag München 1994). Bevorzugt sind Alkylphenolharz- und Terpenphenolharz-Dispersionen mit Erweichungspunkten größer 70 °C, besonders bevorzugt größer 110 °C.

Ebenfalls möglich ist ein Einsatz organischer Lösungsmittel, wie beispielsweise Toluol, Aceton, Xylol, Butylacetat, Methylethylketon, Ethylacetat, Dioxan oder deren Gemische oder Weichmacher, wie beispielsweise solche auf Adipat-, Phthalat- oder Phosphatbasis in Mengen von 0,5 bis 10 Gew.-Teile, bezogen auf nichtflüchtige Anteile.

Die Herstellung der Polymer-Dispersion, erfolgt dadurch, dass die Polyurethan-Dispersion (a) mit der Siliciumdioxid-Dispersion (b) gemischt und gegebenenfalls die üblichen Klebstoffhilfs- und Zusatzmitteln zugegeben werden.

Es ist bevorzugt, dass zunächst die Polyurethan-Dispersion (a) mit den Klebstoffhilfs- und Zusatzmitteln vermischt und die Kieselsole (b) während oder nach der Vermischung zugegeben werden.

Der Auftrag der Klebstoff-Formulierung kann auf bekannte Weisen, z.B. durch Streichen, Gießen, Rakeln, Spritzen, Walzen oder Tauchen durchgeführt werden. Die Trocknung des Klebstofffilms kann bei Raumtemperatur oder erhöhter Temperatur bis zu 220°C erfolgen.

Die Klebstoff-Formulierungen können einkomponentig oder auf bekannte Weisen unter Verwendung von Vernetzern eingesetzt werden.

Die erfindungsgemäßen Polymer-Dispersionen können als Klebstoffe verwendet werden, beispielsweise zum Verkleben beliebiger Substrate gleicher oder verschiedener Art, wie von Holz, Papier, Kunststoffen, Textilien, Leder, Gummi oder anorganischen Materialien, wie Keramik, Steingut, Glasfaser oder Zement.

Gegenstand der vorliegenden Erfindung sind auch Substrate, verklebt durch die wässrigen Polymer-Dispersionen enthaltend
a) eine Polyurethan-Dispersion mit einer mittleren Teilchengröße von 60 bis 350 nm sowie
b) eine wässrige Siliciumdioxid-Dispersion mit einem Partikeldurchmesser der SiO₂-Partikel von 20 bis 400 nm.

Bei den Substraten handelt es sich bevorzugt um Aufbaukomponenten von Schuhen.

### Beispiele

### 1.1 Eingesetzte Substanzen

**Tabelle 1: Polyurethandispersionen**

| **Dispersion** | **Produkt** | **Lieferform** | **Lieferant** |
|---|---|---|---|
| A | Dispercoll^{®} U 53 | 40 %ige Dispersion eines aliphatischen Hydroxyl-polyesterpolyurethans; Partikeldurchmesser 100 nm Mindestaktivier-Temperatur: 45 - 55°C pH 6,0 - 9,0 | Bayer AG, Leverkusen., DE |
| B | Dispercoll^{®} U 54 | 50 %ige Dispersion eines aliphatischen Hydroxylpolyesterpolyurethans; Partikeldurchmesser 200 nm Mindestaktivier-Temperatur: 45 - 55°C pH 6,0 - 9,0 | Bayer AG, Leverkusen., DE |

**Tabelle 2: Siliciumdioxide**

| **Produkt** | **Lieferant** | **Lieferform** | **Typ** |
|---|---|---|---|
| Dispercoll^{®} S 5005 | Bayer AG, Lev., DE | Silicasol-Dispersion, 50 %ig, BET 50 m²/g, pH 9, Partikelgröße 50 nm | Kieselsol |
| Dispercoll^{®} S 3030 | Bayer AG, Lev., DE | Silicasol-Dispersion, 30%ig, BET 300m²/g, pH 10, Partikelgröße 9 nm | Kieselsol |

**Tabelle 3: Vernetzer**

| **Produkt** | **Funktion** | **Hersteller** |
|---|---|---|
| Desmodur^{®} DN | Aliphatisches Vernetzerisocyanat auf der Basis von HDI ^{*)}, Viskosität 1250 ±300 mPas, NCO-Gehalt 21,8 ±0,5% | Bayer AG, Lev,. DE |

| | | |
|---|---|---|
| ^{*)} 90,77 Gew.-% polymeres hydrophyliertes HDI-Trimerisat (Desmodur^{®} N3600) 4,78 Gew.-% eines internen, auf der Basis eines monofunktionellen Alkohols gestarteten Emulgators mit EO/PO, OH-Zahl 40) | | |

### 1.2 Meßmethoden

### 1.2.1 Bestimmung der Schälfestigkeit auf Weich-PVC nach Schockaktivierung

Die Prüfung erfolgt gemäß EN 1392. Auf zwei Prüfkörper Weich-PVC (30 % Dioctylphthalat, DOP) mit den Maßen 100 x 30 mm, gerauht mit Schleifpapier (Körnung 80), wird mittels Pinsel die Dispersion beidseitig auf die aufgeraute Fläche aufgetragen und bei Raumtemperatur 60 Min. getrocknet. Anschließend werden die Prüflinge schockaktiviert: Die Klebeflächen werden 10 Sekunden mit einem IR-Strahler der Fa. Funk (Schock-Aktiviergerät 2000) bestrahlt. Dabei erwärmt sich der Klebefilm auf eine Oberflächentemperatur von 90±2 °C. Die Verklebung erfolgt sofort nach der Wärmeaktivierung der mit Klebstoff beschichteten Prüfkörper, indem die aktivierten Klebeschichten gegeneinander gelegt und in einer Presse verpresst werden (60 Sekunden; 4 bar Leitungsdruck). Es erfolgt eine Rißprüfung auf einer handelsüblichen Zugprüfmaschine bei Raumtemperatur. Es werden die Festigkeitswerte sofort nach der Klebung und nach drei Tag ermittelt. Die Prüfkörper werden bei 23 °C und 50 % relativer Feuchte gelagert.

### 1.2.2 Bestimmung der Anfangswärmefestigkeit (AWF) auf Buchenholz/Hart-PVC

### Materialien:

- Buchenholzprüfkörper 50 x 150 x 4 mm
- PVC-Folie (Renolit 32052096 Strukton; Fa. Renolit Worms, DE) Desmodur^{®} DN

### Klebstoffauftrag:

- Klebstoffauftrag einkomponentig mit Rakel, 200 µm

### Ablüftzeit:

- Mindestens 3 Stunden nach Klebststoffauftrag bei Raumtemperatur

### Pressbedingungen:

- 10 s bei 77 °C Fugentemperatur und 4 bar Pressdruck

### Prüfbedingungen im Trockenschrank:

- 80 °C Umlufttrockenschrank, Last 2,5 kg

### Durchführung:

Der Klebststoff wird einkomponentig mit einem Rakel (200µm) auf den Holzprüfkörper aufgetragen. Die Folie wird so geschnitten, dass nach dreimaligem Umschlagen des Randes die Gesamtlänge 12 cm beträgt. 3 Stunden nach dem Klebstoffauftrag, wird der Holzprüfkörper mit Folie bei 77°C Fugentemperatur und 4 bar eff. Druck, 10 s auf der Membranpresse gefügt.

Unmittelbar im Anschluss hieran wird der Verbund für 3 min ohne Gewicht in den Wärmestand-Trockenschrank gelegt und danach für 5 min mit 2,5 kg belastet. Dazu wird der Holzprüfkörper in den Wärmeschrank gehängt und an die zur Verstärkung dreifach umgeschlagene Folie wird die Klemmvorrichtung mit dem Gewicht eingespannt. Nach Ablauf der Zeit wird das Gewicht sofort entfernt und der Verbund ausgespannt. Die Schälstrecke wird ausgemessen und in [mm/min] angegeben.

### 1.3 Herstellung der Klebstoffzusammensetzung

Für die Herstellung der Formulierung wird die Polyurethan Dispersion in einem Becherglas vorgelegt. Unter Rühren wird das Siliciumdioxid zugegeben. Für eine zweikomponentige Verklebung werden 100 Gewichtsteile Dispersion mit 3 Gewichtsteilen eines emulgierbaren Vernetzerisocyanates mindestens 2 Min. homogenisiert. Diese Mischung kann ca. 2 Std. verwendet werden.

**Tabelle 4: Formulierungen**

| **Produkt** | **Rezeptur (Angaben in Gew.-Teilen)** | | | | | |
|---|---|---|---|---|---|---|
| | **1** | **2** | **3** | **4** | **5** | **6** |
| Polyurethan Dispersion: | | | | | | |
| A | 100 | 100 | 100 | 100 | 100 | 100 |
| B | | | | | | |
| Siliciumdioxid-Typ | | | | | | |
| Dispercoll^{®} S 5005 | - | 26 | 43 | - | 32,5 | 54,1 |
| Dispercoll^{®} S 3030 | - | | | - | | |

### 1.4 Ergebnisse

### 1.4.1 Bestimmung des Schälwiderstands auf Weich-PVC

**Tabelle 5: Schälwiderstand Weich-PVC**

| **Beispiel-Nr.** | **Formulierungs-Nr.** | **Desmodur DN [Tl.]** | **Schälwiderstand sofort** [N/mm] | **Schälwiderstand nach 3 Tagen** [N/mm] |
|---|---|---|---|---|
| 1* | 1 | - | 5,0 | 10,2 |
| 2* | 1 | 3 | 3,5 | 10,1 |
| 3 | 2 | - | 6,1 | 9,5 |
| 4 | 2 | 3 | 5,2 | 9,5 |
| 5* | 3 | - | 1,0 | 1,0 |
| 6* | 3 | 3 | 0,9 | 2,3 |
| 7* | 4 | - | 6,1 | 8,9 |
| 8* | 4 | 3 | 5,5 | 8,7 |
| 9 | 5 | - | 5,5 | 5,4 |
| 10 | 5 | 3 | 5,4 | 7,0 |
| 11* | 6 | - | 1,4 | 0,2 |
| 12* | 6 | 3 | 1,6 | 0,8 |

| | | | | |
|---|---|---|---|---|
| *: Vergleichsbeispiele | | | | |

Wie Tabelle 5 entnommen werden kann, bewirkt der Zusatz von Dispercoll^{®} S 5005 ein gleichbleibend hohes Festigkeitsniveau wie unformulierte PU-Dispersionen. Formulierung mit Dispercoll^{®} S 3030 bewirkt eine signifikante Verschlechterung der Schälfestigkeit auf Weich-PVC.

### 1.4.2 Bestimmung der Anfangswärmefestigkeit auf Buchenholz/Hart-PVC

**Tabelle 6: Anfangswärmefestigkeit**

| **Beispiel-Nr.** | **Formulierungs-Nr.** | **AWF** [mm/Minute] |
|---|---|---|
| 13* | 4 | 9,8 |
| 14 | 5 | 1,9 |
| 15* | 6 | Abschälung |

| | | |
|---|---|---|
| * Vergleichsbeispiele | | |

Wie Tabelle 6 entnommen werden kann, bewirkt der Zusatz von Dispercoll^{®} S 5005 ein signifikante Verbesserung der Anfangswärmefestigkeit gegenüber unformulierter PU-Dispersion. Formulierung mit Dispercoll^{®} S 3030 führt zu einer vollständigen Abschälung der Prüfkörper.

## Patentansprüche

1. Verwendung wässriger Polymer-Dispersion enthaltend
a) eine Polyurethan-Dispersion mit einer mittleren Teilchengröße von 60 bis 350 nm sowie
b) eine wässrige Siliciumdioxid-Dispersion mit einem Partikeldurchmesser der SiO₂-Partikel von 20 bis 400 nm zur Herstellung von Klebstoffen.

2. Verwendung gemäß Anspruch 1, **dadurch gekennzeichnet, dass** die SiO₂-Partikel einen Partikeldurchmessser von 30 bis 100 nm aufweisen.

3. Verwendung gemäß Anspruch 1, **dadurch gekennzeichnet, dass** die SiO₂-Partikel einen Partikeldurchmessser von 40 bis 80 nm aufweisen.

4. Verwendung gemäß Ansprüchen 1 bis 3, **dadurch gekennzeichnet, dass** die SiO₂-Partikel als diskrete unvernetzte Primärpartikel vorliegen.

5. Verwendung gemäß Ansprüchen 1 bis 4, **dadurch gekennzeichnet, dass** die SiO₂-Partikel über Hydroxylgruppen an der Partikel-Oberfläche verfügen.

6. Verwendung gemäß Ansprüchen 1 bis 5, **dadurch gekennzeichnet, dass** die wässrige Siliciumdioxid-Dispersion b) eine wässrige Kieselsäuresole ist.

7. Verklebte Substrate, verklebt durch eine wässrige Polymer-Dispersion enthaltend
a.) eine Polyurethan-Dispersion mit einer mittleren Teilchengröße von 60 bis 350 nm sowie
b.) eine wässrige Siliciumdioxid-Dispersion mit einem Partikeldurchmesser der SiO₂-Partikel von 20 bis 400 nm.

8. Substrate nach Anspruch 7, **dadurch gekennzeichnet, dass** es sich um Aufbaukomponenten von Schuhen handelt.

## Claims

1. Use of an aqueous polymer dispersion comprising
a) a polyurethane dispersion having an average particle size of 60 to 350 nm and
b) an aqueous silicon dioxide dispersion having a particle diameter of the SiO₂ particles of 20 to 400 nm for the preparation of adhesives.

2. Use according to claim 1, **characterized in that** the SiO₂ particles have a particle diameter of 30 to 100 nm.

3. Use according to claim 1, **characterized in that** the SiO₂ particles have a particle diameter of 40 to 80 nm.

4. Use according to claims 1 to 3, **characterized in that** the SiO₂ particles are in the form of discrete non-crosslinked primary particles.

5. Use according to claims 1 to 4, **characterized in that** the SiO₂ particles have hydroxyl groups on the particle surface.

6. Use according to claims 1 to 5, **characterized in that** the aqueous silicon dioxide dispersion b) is an aqueous silica sol.

7. Glued substrates, glued by an aqueous polymer dispersion comprising
a.) a polyurethane dispersion having an average particle size of 60 to 350 nm and
b.) an aqueous silicon dioxide dispersion having a particle diameter of the SiO₂ particles of 20 to 400 nm.

8. Substrates according to claim 7, **characterized in that** they are structural components of shoes.

## Revendications

1. Utilisation d'une dispersion aqueuse de polymère contenant
a) une dispersion de polyuréthane ayant une dimension particulaire moyenne de 60 à 350 nm, ainsi que
b) une dispersion aqueuse de dioxyde de silicium ayant un diamètre des particules de SiO₂ de 20 à 400 nm pour la fabrication de colles.

2. Utilisation selon la revendication 1, **caractérisée en ce que** les particules de SiO₂ ont un diamètre particulaire de 30 à 100 nm.

3. Utilisation selon la revendication 1, **caractérisée en ce que** les particules de SiO₂ ont un diamètre particulaire de 40 à 80 nm.

4. Utilisation selon les revendications 1 à 3, **caractérisée en ce que** les particules de SiO₂ sont présentes sous la forme de particules primaires discrètes non réticulées.

5. Utilisation selon les revendications 1 à 4, **caractérisée en ce que** les particules de SiO₂ disposent à leur surface de groupes hydroxyle.

6. Utilisation selon les revendications 1 à 5, **caractérisée en ce que** la dispersion aqueuse de dioxyde de silicium b) est un sol aqueux d'acide silicique.

7. Substrats collés, collés par une dispersion aqueuse de polymère contenant
a.) une dispersion de polyuréthane ayant une dimension particulaire moyenne de 60 à 350 nm, ainsi que
b.) une dispersion aqueuse de dioxyde de silicium ayant un diamètre des particules de SiO₂ de 20 à 400 nm.

8. Substrats selon la revendication 7, **caractérisés en ce qu'**il s'agit de composants structurels de chaussures.
